# EUROPEAN PATENT APPLICATION

(11) **EP 1 990 613 A1**
(43) Date of publication of application: **12.11.2008**
(21) Application number: 07380125.0
(22) Date of filing: 08.05.2007
(51) Int. Cl.: G01F 3/22

(54) **Mechanical temperature compensation gas meter**

(71) Applicant: Marron Legarreta, Carlos Roman, 08036 Barcelona (ES)
(72) Inventor: Marron Legarreta, Carlos Roman, 08036 Barcelona (ES)
(74) Representative: Munoz Garcia, Antonio

(57) **Abstract**

The meter comprises a container with an internal core (4) associated to a diaphragm (8) in combination to pressing bars (10-11), rocker (9) and closing covers (13), including as fundamental characteristic the incorporation over the upper part of the core (4) a seat (15) for a turning valve (18) related to a central plate (15) with an off-centre hole for coupling a fork (25) to which a helical spring (28) and a position-shift axis (30) are linked, so that the differences of temperature imply the extension or contraction of the spring (28) and consequently the movements of the fork (25) and corresponding displacement in one and other direction of the position-shift axis (30) in respect of the turning valve (18), so that the movement track of the diaphragm (8) will change to reach the compensation of temperature and ensure the accuracy of the meter itself at different temperatures.

## Description

This invention is related to temperature compensation gas meter of the mechanical transmission type including a diaphragm and a rotary valve.

The purpose of the invention is to provide a gas meter which is reliable and accurate when measuring despite of the temperature variations it might be subject to.

### BACKGROUND OF THE INVENTION

Many gas companies install the gas meters outside the houses for safety and convenience of reading reasons. However, the temperatures inside and outside the houses are different, and it is estimated that a difference of temperature of, for example, 3° C, causes a measuring error of 1%. That is to say, if in winter the exterior temperature may reach -10 °C and inside the house it may be around 15° C, the temperature discrepancy will be 25°C, with the corresponding economic losses for the supply company of a 8% used gas.

On the other hand, the current diaphragm gas meters are divided into two types, one with a to-and-from sliding valve and the other with a turning or rotary valve, being the first one the traditional or former design with a bigger cycling volume whilst the second one is smaller and structurally more simple.

Bearing in mind the mentioned second type of diaphragm gas meters, we have to remark its great need of temperature compensation for which reason the measuring function is not as reliable as desired, as it also happens with its accuracy.

### DESCRIPTION OF THE INVENTION

The diaphragm gas meter with compensation of temperature advocated herein has been conceived to solve the aforementioned problems, so basing on the type including a container where a core is set in the middle on which a seat for the turning or rotary valve is coupled, incorporating a link pole and a toggle joint at each end for respective standing axis coupled to the core itself, and having the corresponding lateral diaphragms associated to the respective rockers, plates and compression lids, offering the peculiarity of the turning valve axially connected to an axis plate established in the core, being such plate affected by an off-centre hole over which a fork is coupled to which, at one end, a lateral and extreme derivation of a bimetallic heat sensitive helical spring is connected, being also connected to such fork the inferior end of a position-shift axis, which upper end is connected to the link pole.

Based on such characteristics, when the temperature varies the spring spreads or shrinks making that the corresponding extension or contraction movement is transmitted to the fork which drives the position-shift axis to increase or reduce its eccentric distance to the turning valve itself.

Thus the diaphragm movement track will be changed so as to achieve the temperature compensation and ensure the accuracy of the meter at different temperatures.

### DESCRIPTION OF THE DRAWINGS

In order to complete the description being made and with the purpose of helping a better comprehension of the invention characteristics, according to a preferential example of practical implementation of the same, a set of drawings is attached as of the description where, with an illustrative non limitative character, the following has been represented:

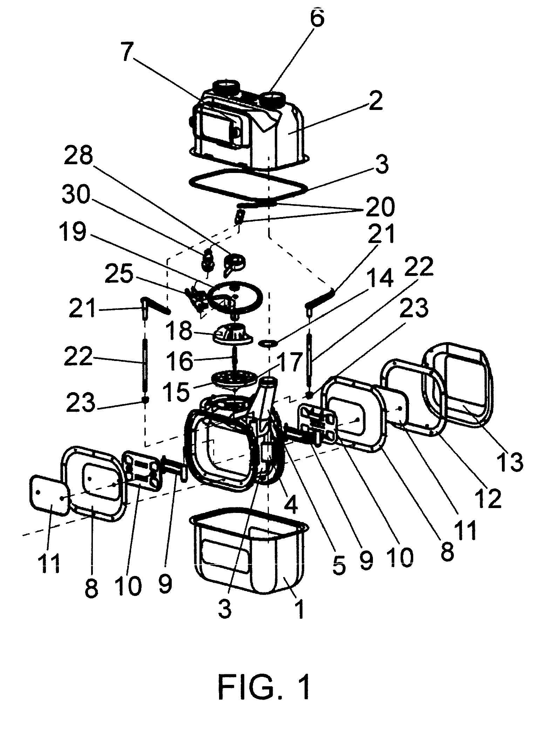

Figure 1.- It shows a representation as per an exploding perspective of the different parts and elements constituting the meter made according to the improvements of the invention.
Figure 2.- It shows an enlarged detail of a part of said meter where the core axis plate, the turning valve, the fork, the helical spring and the position-shift axis appear.

### PREFERENTIAL IMPLEMENTATION OF THE INVENTION

As shown on the referred drawings, the gas meter comprises a general container formed by two semi-containers or halves (1) and (2), coupled one to each other with interposition of a connection washer (3), forming a container coupled with a core (4) an exhaust pipe (5). In the upper semi-container (2) the corresponding connections (6) and the side lid (7) have been foreseen. In the lateral part of the core (4) a diaphragm (8), a rocker (9), the compression lids (10) and (11) of the diaphragm, a diaphragm pressing bar and the closing cover (13).

On the upper part of the said core (3), besides the exhaust pipe (5), with a sealing ring (14), a valve seat is set (15) through which an axis axial and centrally passes (16) held by a nut (17), over which axis and valve seat a turning valve is coupled (18) connected to an axis plate (19) foreseen above the core itself (4).

The set includes besides a link pole (20) with a toggle joint (21) at each end, being the same connected with respective standing axis (22), assisting the corresponding rocker (9) and sealed such axis (22) by means of a sealing ring (23).

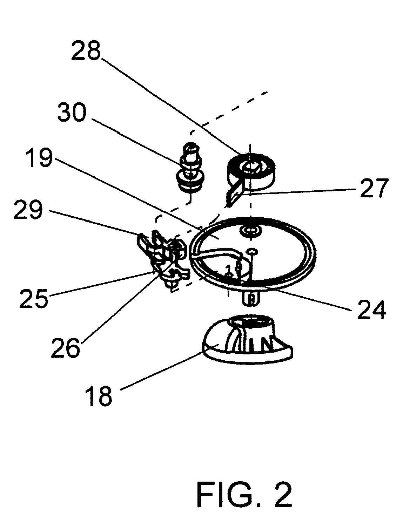

As shown on figure 2, the axis plate (19) is affected by an off-centre hole (24) where a fork is coupled (25) with an inner part (26) to which a side external derivation is coupled (27), corresponding to a helical spring (28) heat sensitive. Said fork (25) has an external part (29) to which the lower end of a position-shift axis (30) is coupled which upper end is connected to the link pole (20).

Thus, if the meter is installed outside, when the temperature is different from the inside, the helical spring (28) will circumvolve and force the fork (25) to move driving the standing axis (22) which is located on the axis plate (19) of the core (4), changing the off-centre distance between the position-shift axis (30) and the turning valve (18).

The referred movement is passed through such turning valve (18), the link pole (20), the toggle joint (21), the standing axis (22), the rocker (9) and the diaphragm (8), to change the movement track of the diaphragm and correct the measurement of the meter itself.

Specifically, when the meter is at a lower temperature than the interior temperature of the house, the helical spring (28) will shrink thus reducing the movement track of the diaphragm (8) to obtain a positive compensation through the link pole (20), the toggle joint (21), the rocker (9) and the diaphragm (8).

Now, when the gas meter is at a temperature higher than such of the interior of the house, then the helical spring (28) will spread to drive the standing axis (30) oppositely to the turning valve (18), so the movement track of the diaphragm (8) will be extended to obtain a negative compensation through the link pole (20), the toggle joint (21), the rocker (9) and the diaphragm (8).

## Claims

1. ^{st} Mechanical gas meter with temperature compensation formed by a container in two (1-2) hollow halves coupled one to the other to determine a location container for a core (4) with side diaphragms (8) associated to pressing bars (10) and (11) and side covers (13), being coupled over such core (4) a seat (15) for a turning valve (18), as well as a pressing bar (20) on which ends both toggle joints are coupled (21) associated to respective standing axis (22), it is **characterized** for the turning valve (18) coupled between he valve seat (15) foreseen in the core (4) and an upper central plate (19) connected to the turning valve itself (18); a bimetallic heat sensitive helical spring (28) is foreseen with a side and external derivation (27) fitted to the internal part (26) of a fork (25) set over an off-centre hole (24) of the central plate (19); with the particularity that over the external part (29) of such fork (25) the lower end of a position-shift axis (30) is coupled with its upper end connected to the link pole (20), so that a change of temperature and corresponding extension or contraction of the helical spring (28) drives the fork (25) which drives the position-shift axis (30) to increase or reduce the eccentric distance to the turning valve (18), thus changing the movement track of the diaphragms (8) to reach the compensation of temperature and ensure the accuracy of the meter.
